# EUROPÄISCHE PATENTSCHRIFT

(11) **EP 2 614 700 B1**
(45) Veröffentlichungstag und Bekanntmachung des Hinweises auf die Patenterteilung: **25.04.2018**
(21) Anmeldenummer: 12199207.7
(22) Anmeldetag: 21.12.2012
(51) Int. Cl.: A01D 65/02

(54) **Heber für Erntegut**
Lifter for crops
Levier pour récolte

(30) Priorität: 13.01.2012 DE 102012100302
(43) Veröffentlichungstag der Anmeldung: 17.07.2013
(60) Teilanmeldung: 14177260.8
(73) Patentinhaber: Gebr. Schumacher Gerätebaugesellschaft mbH, 57612 Eichelhardt (DE)
(72) Erfinder: Höller, Frank, 57629 Stein Wingert (DE); Schumacher, Friedrich-Wilhelm, 57612 Birnbach (DE)
(74) Vertreter: Müller, Thomas Michael

(56) Entgegenhaltungen:
- WO-A1-2006/072158
- DE-A1- 1 482 880
- DE-C- 320 550
- DE-C- 864 637
- US-A- 2 734 332

## Beschreibung

Die Erfindung betrifft einen Heber für Erntegut für ein Mähwerk einer Erntemaschine, umfassend eine an dem Mähwerk befestigbare Tragschiene, wobei die Tragschiene einen Profilträger aufweist und wobei ein Heberprofil an dem Profilträger vorgesehen ist, oder wobei das Heberprofil mit der Tragschiene verbunden ist.

Aus dem Stand der Technik ist ein sogenannter Ährenheber bekannt, welcher mit dem vorderen Teil der Tragschiene, an dem ein Halmheber befestigt ist, über den Boden gleitet oder sich knapp über dem Boden bewegt und mit dem Halmheber am Boden liegende Halme des Ernteguts aufnimmt, so dass diese durch das Messerwerk des Mähwerks abgeschnitten werden können und somit die Ähren beispielsweise einem Dreschwerk zugeführt werden können. Einen derartigen Ährenheber zeigt die DE 23 25 916 A, bei dem der Halmheber durchgängig aus einem U-förmigen Profilteil besteht, dessen Schenkel sich ausgehend von der Verschweißung des Halmhebers an der Tragschiene zum freien Ende des Halmhebers zunehmend verkürzen.

Bei Erntegut, welches die Früchte nicht an der Spitze von vergleichsweise langen Halmen trägt, wie dies bei Getreide der Fall ist, sondern an Sträuchern wächst, wie beispielsweise Hülsenfrüchte, sind die Früchte oder Schoten in dem gesamten Strauch verteilt, auch in dem bodennahen Bereich des Strauchs. Daraus ergibt sich die Forderung, derartiges Erntegut besonders knapp über dem Boden zu schneiden und durch spezielle Heber derart anzuheben, dass möglichst keine Früchte durch das Mähwerk zerstört werden. Dazu werden beispielsweise die zuvor beschriebenen Ährenheber mit der Abwandlung verwendet, dass die führende Spitze des Halmhebers so weit herabragt, dass diese idealer weise unmittelbar an der Ackeroberfläche geführt wird. Durch Steine im Boden werden die Ährenheber dabei jedoch häufig beschädigt und müssen aufwendig ausgetauscht bzw. instandgesetzt werden. Die WO 2006/072158 A1 betrifft einen Ährenheber, wobei vorgeschlagen wird, ein Heberprofil lösbar an einer tragenden Struktur anzuordnen, so dass das Heberprofil einzeln austauschbar ist und ein Austausch des gesamten Ährenhebers vermieden wird. Ein Nachteil besteht darin, dass ein Austausch der tragenden Struktur, falls dieser dennoch erforderlich wird, aufwändig ist und dass die Häufigkeit der Ausfälle der Heberprofile an sich nicht verringert wird.

Die Druckschrift US 2 734 332 A betrifft ein Heberprofil mit einem verstellbaren Gleitschuh, der im Einsatz nahe am Ackerboden geführt werden kann und durch seine Formgebung und Verstellbarkeit dazu geeignet ist, über Hindernisse, wie beispielsweise Steine, hinweg zu gleiten. Das Heberprofil selbst ist nicht verstellbar und ist im Vergleich zu dem Gleitschuh höher angesetzt, um eine Beschädigung des Profils zu vermeiden.

Eine Aufgabe der Erfindung besteht darin, einen Heber für Erntegut zur Verfügung zu stellen, welcher weniger störungsanfällig und/oder mit geringerem Aufwand instand setzbar ist.

Die Aufgabe wird gelöst durch einen Heber für Erntegut der eingangs genannten Art, wobei ein Heberprofil zur lösbaren Befestigung an dem Profilträger vorgesehen ist, der sich erfindungsgemäß dadurch auszeichnet, dass das Heberprofil in einer Mehrzahl von diskreten, in Längsrichtung des Heberprofils beabstandeten Positionen mit dem Profilträger verbindbar ist.

Mit der Bezeichnung als Heber für Erntegut soll zum Ausdruck gebracht werden, dass keine Einschränkung auf ein spezielles Erntegut, wie Getreideähren oder Hülsenfrüchte vorgenommen wird. Der erfindungsgemäße Heber für Erntegut ist als Heber für beliebiges Erntegut geeignet. Auf Besonderheiten in der Verarbeitung von speziellem Erntegut wird gegebenenfalls im Einzelnen eingegangen.

Der erfindungsgemäße Heber für Erntegut für ein Mähwerk einer Erntemaschine umfasst eine an dem Mähwerk befestigbare Tragschiene mit einen Profilträger für ein Heberprofil, in der Regel an einem in einer Arbeitsrichtung vorderen Ende der Tragschiene. Die Arbeitsrichtung entspricht in der Regel der Fahrtrichtung der Erntemaschine. Das Heberprofil ist zur lösbaren Befestigung an dem Profilträger vorgesehen. Ein Vorteil des erfindungsgemäßen Hebers für Erntegut besteht darin, dass das Heberprofil einzeln von dem Profilträger lösbar und austauschbar ist. Bei einer Beschädigung kann dieser Austausch schnell und einfach durchgeführt werden. Die Ersatzteile in Form der einzelnen Profilträger sind wesentlich kleiner, leichter und kostengünstiger als vollständige, einteilige Ährenheber.

Erfindungsgemäß ist das Heberprofil in einer Mehrzahl von in Längsrichtung des Heberprofils beabstandeten Positionen mit dem Profilträger verbindbar. Die Längsrichtung entspricht einer Haupterstreckungsrichtung des in der Regel im Wesentlichen stabförmigen oder klingenförmigen Heberprofils. Der erfindungsgemäße Heber für Erntegut erlaubt vorteilhaft eine Verstellung des Heberprofils in Längsrichtung und bietet somit eine Möglichkeit, die Höhe der führenden Spitze des Heberprofils über dem Boden besonders genau einzustellen und sie mit möglichst geringem Abstand über dem Boden zu führen. Weiterhin erfindungsgemäß ist die Verbindung in diskreten Positionen entlang des Heberprofils herstellbar und weiterhin besonders bevorzugt als formschlüssige Verbindung. Damit ist insbesondere eine formschlüssige Verbindung zwischen dem Heberprofil und dem Profilträger in Längsrichtung des Heberprofils gemeint, da in dieser Richtung die größte Kraft auf die Verbindung einwirkt. Die Einstellbarkeit in diskreten Positionen, das bedeutet in endlichen, abzählbaren Positionen, hat den Vorteil gegenüber einer stufenlosen Verstellbarkeit, dass bei einem bekannten Abstand der Positionen zueinander eine Einstellung auf ein bestimmtes Maß ohne Zuhilfenahme von Messmitteln ermöglicht wird.

Gemäß einer weiteren bevorzugten Ausführungsform ist vorgesehen, dass das Heberprofil einen Verbindungsbereich aufweist, wobei der Verbindungsbereich sich in Längsrichtung entlang des Heberprofils erstreckt und wobei Befestigungsmittel an dem Profilträger mit dem Verbindungsbereich zusammenwirken. Besonders bevorzugt weisen die Befestigungsmittel eine Klemmbackenanordnung und/oder eine Verzahnung auf. Insbesondere ist die Verzahnung an dem Profilträger, vorzugsweise an einer Klemmbacke vorgesehen. Die entsprechende Klemmbacke kann beispielsweise einteilig mit Verzahnung hergestellt sein, insbesondere als Gieß- oder Spritzgießteil. Alternativ könnte die Verzahnung an mindestens einem Einlegeteil gebildet sein, wobei mindestens eine Klemmbacke des Profilträgers ein Einlegeteil formschlüssig aufnimmt.

Gemäß einer weiteren bevorzugten Ausführungsform ist vorgesehen, dass das Heberprofil in dem Verbindungsbereich eine Gegenverzahnung aufweist, wobei die Gegenverzahnung mit der Verzahnung an dem Profilträger zusammenwirkt.

Gemäß einer weiteren bevorzugten Ausführungsform ist der Profilträger über eine quer zur Arbeitsrichtung ausgerichtete Drehachse drehbeweglich verstellbar. Dadurch lässt sich vorteilhaft auch der Winkel zwischen dem Heberprofil und der Tragschiene anpassen, wodurch die Position der führenden Spitze des Heberprofils relativ zum Boden zusätzlich einstellbar ist.

Vorzugsweise sind die Profilträger aus einem stabilen Werkstoff hergestellt, welcher besonders gut elastisch verformbar ist ohne sich wesentlich plastisch zu verformen.

Gemäß einer weiteren bevorzugten Ausführungsform weist das Heberprofil ein in Arbeitsrichtung führendes Ende auf, wobei ein Durchbruch in dem Heberprofil zur Erleichterung einer elastischen Verformung des Heberprofils bei einer Krafteinwirkung auf das führende Ende vorgesehen ist. Der Durchbruch bewirkt ein Einknicken des Heberprofils in dem Bereich des Durchbruchs, der eine strukturelle Schwächung darstellt und eine elastische Verformung erleichtert. Trifft das führende Ende des Heberprofils im Einsatz an einem Heber für Erntegut auf beispielsweise einen Stein, der eine erhebliche Kraft auf das Heberprofil ausübt, so gibt das erfindungsgemäße Heberprofil leichter nach und weicht dem Hindernis durch elastische Verformung aus, ohne dass es zu Schäden an dem Heber für Erntegut kommt. Anschließend federt das Heberprofil zurück in seine ursprüngliche Form. Besonders vorteilhaft ist das erfindungsgemäße Heberprofil dort einsetzbar, wo das führende Ende des Heberprofils besonders tief geführt wird, beispielsweise unmittelbar oberhalb der Bodenoberfläche, wie dies besonders bei der Ernte von Hülsenfrüchten, beispielsweise Bohnen, insbesondere Sojabohnen der Fall ist.

Gemäß einer bevorzugten Ausführungsform ist vorgesehen, dass der Durchbruch zumindest abschnittsweise zwischen dem führenden Ende und einem Verbindungsbereich zur Befestigung an einem Profilträger angeordnet ist. Vorzugsweise weist der Durchbruch eine Haupterstreckungsrichtung entlang einer Längsrichtung des Heberprofils auf. Der Durchbruch ist insbesondere in Längsrichtung mindestens doppelt so lang, wie quer zu der Längsrichtung. Besonders bevorzugt läuft der Durchbruch an seinen Enden in Längsrichtung unter spitzem Winkel zu. Weiterhin bevorzugt ist der Durchbruch von einem Steg verschlossen, wobei der Steg einer Deformierung des Durchbruchs keinen wesentlichen Widerstand entgegensetzt.

Weitere Merkmale des Hebers sind zum besseren Verständnis beschrieben, jedoch nicht beansprucht. Diese betreffen den Heber für Erntegut für ein Mähwerk einer Erntemaschine, umfassend eine an dem Mähwerk befestigbare Tragschiene, wobei ein Heberprofil mit der Tragschiene verbunden ist, wobei die Tragschiene eine Ausnehmung zur Befestigung an dem Mähwerk aufweist, und wobei um die Ausnehmung herum eine Anschraubfläche derart in die Oberfläche der Tragschiene eingearbeitet ist, dass durch die Anschraubfläche und die Oberfläche definierte Ebenen einen spitzen Winkel einschließen. Als Anschraubfläche ist diejenige Fläche zu verstehen, auf welche der Kopf eines Gewindebolzens bzw. eine Gewindemutter beim Festziehen einer Schraubverbindung wirkt. Die entsprechenden Flächen an dem Kopf oder der Mutter sind parallel zu der Oberfläche der Tragschiene ausgerichtet und somit um den spitzen Winkel zu der Anschraubfläche gekippt. Es kommt zu einer Verspannung der Schraubverbindung, was die Festigkeit der Schraubverbindung nicht beeinträchtigt. Vorteilhaft wird dadurch eine Verlustsicherung für den gesamten Heber für Erntegut geschaffen. Bei einem selbsttätigen Lösen der Schraubverbindung kann sich der Heber in Arbeitsrichtung gesehen nach vorne verschieben, wodurch die Schraubverbindung vorteilhaft erneut verspannt wird, da die Anschraubfläche sich keilartig unter die Gewindemutter bzw. den Schraubenkopf schiebt. Ein weiterer Vorteil für die Handhabung des Hebers besteht darin, dass keine Sicherungsmaßnahmen zur Sicherung der Schraubverbindung vorgenommen werden müssen, welche im Falle eines durch Beschädigung notwendigen Austausches des Hebers aufwändig geöffnet werden müssten. Durch die abgeschrägte Anschraubfläche kann eine einfach zu lösende Schraubverbindung verwendet werden. Vorzugsweise weist der spitze Winkel ein Winkelmaß von weniger als 5 Grad auf, vorzugsweise von weniger als 3 Grad und besonders bevorzugt von etwa 1,5 Grad. Winkel von weniger als 0,5 Grad sind eher zu flach, als dass der technische Effekt erzielt werden könnte.

Gemäß einer bevorzugten Ausführungsform ist die Ausnehmung als ein sich in Arbeitsrichtung erstreckendes Langloch ausgeführt und/oder die Ausnehmung ist zu einem in Arbeitsrichtung hinteren Ende der Tragschiene hin geöffnet. Dadurch ist besonders vorteilhaft eine Demontage und Montage des erfindungsgemäßen Hebers ohne ein vollständiges Herausdrehen des Bolzens aus der Mutter möglich. Weiterhin bevorzugt weist die Tragschiene eine Aufnahme für einen Mähfinger an dem Mähwerk der Erntemaschine auf. Mit dieser Aufnahme wird der Heber auf den in Arbeitsrichtung nach vorn weisenden Mähfinger aufgeschoben.

Ein weiteres nicht beanspruchtes Ausführungsbeispiel betrifft den Heber für Erntegut für ein Mähwerk einer Erntemaschine, umfassend eine an dem Mähwerk befestigbare Tragschiene, wobei die Tragschiene einen Profilträger aufweist und wobei ein Heberprofil zur lösbaren Befestigung an dem Profilträger durch eine Klemmbackenanordnung mit zwei Klemmbacken vorgesehen ist. Vorzugsweise handelt es sich bei dem Heber um eine Ausführungsform des eingangs beschriebenen Hebers.

Mindestens eine der zwei Klemmbacken ist lösbar, während die andere der zwei Klemmbacken an dem Profilträger festgelegt bleibt. Dadurch lässt sich besonders vorteilhaft ein defektes Heberprofil auswechseln oder in Längsrichtung L verstellen, ohne dass der eingestellte Winkel für das Heberprofil verloren geht. Da die zweite Klemmbacke an dem Profilträger befestigt bleibt, kann die gelöst Klemmbacke einfach auf dieselbe Winkelposition eingestellt werden, wie die feste Klemmbacke und das neue Heberprofil ist exakt ausgerichtet. Angesichts der nicht unerheblichen Anzahl von Wechseln defekter Heberprofile pro Erntesaison stellt der Entfall der Ausrichtung des Winkels eine Arbeitserleichterung und Zeitersparnis dar.

Gemäß einer bevorzugten Ausführungsform ist vorgesehen, dass die Klemmbacken jeweils mit einem separaten Befestigungsmittel an dem Profilträger befestigt sind.

Somit ist es gleichgültig, welche Klemmbacke gelöst wird. Die jeweils andere bleibt fest verbunden mit dem Profilträger. Insbesondere weisen die Klemmbacken jeweils eine erste Ausnehmung zur befestigenden Aufnahme eines Schraubbolzens und eine zweite Ausnehmung als Zugang zu einem Schraubbolzen der jeweils anderen Klemmbacke auf. Die zweite Ausnehmung ermöglicht vorteilhaft, den Schraubbolzen der jeweils anderen Klemmbacke mit einem Gegenelement, also beispielsweise einer Schraubmutter an dem Profilträger zu sichern. Das bedeutet, die ersten Aufnahmen weisen jeweils eine kleinere Bohrung auf, als die zweiten Aufnahmen, so dass eine Befestigung nur mit den ersten Aufnahmen möglich ist. Die ersten Aufnahmen können vorzugsweise eine Ausformung entsprechend der Kopfform des Schraubbolzenkopfs entsprechen, um das Anziehen der Schraubmutter zu erleichtern.

Alle hierin beschriebenen Erfindungsgegenstände sind beliebig miteinander kombinierbar. Bevorzugte Ausführungsbeispiele werden nachfolgend mit Bezugnahme auf die Zeichnungen dargestellt.

Hierin zeigen:
Figur 1 eine perspektivische Ansicht einer Ausführungsform eines erfindungsgemäßen Hebers für Erntegut;
Figur 2 den Heber für Erntegut nach Figur 1 in einer Seitenansicht;
Figur 3 den Heber für Erntegut nach Figur 1 in einer Ansicht von oben auf das Heberprofil;
Figur 4 einen Querschnitt längs der Linie A-A nach Figur 2;
Figur 5 einen Schnitt längs der Linie J-J nach Figur 2;
Figur 6 eine Seitenansicht des Details G nach Figur 2;
Figur 7 eine Ansicht von oben des Details gemäß Figur 6;
Figur 8 einen Schnitt längs der Linie H-H nach Figur 7;
Figur 9 eine Seitenansicht eines einteiligen Hebers für Erntegut nach dem Stand der Technik, festgelegt an einem Mähmesserbalken und Mähfinger einer Erntemaschine;
Figur 10 eine perspektivische Ansicht einer weiteren Ausführungsform eines erfindungsgemäßen Hebers für Erntegut;
Figur 11 eine Seitenansicht eines Details entsprechend Figur 6, jedoch in der Ausführungsform des Hebers gemäß Figur 10;
Figur 12 eine Ansicht von oben des Details gemäß Figur 11;
Figur 13 einen Schnitt längs der Linie H-H nach Figur 12;
Figur 14 eine Seitenansicht einer weiteren Ausführungsform eines erfindungsgemäßen Hebers für Erntegut;
Figur 15 einen Schnitt längs der Linie A-A in der Figur 14;
Figuren 16 bis 19 verschiedene Ansichten einer Klemmbacke einer Ausführungsform des Hebers gemäß der Figur 14;
Figuren 20 und 21 den erfindungsgemäßen Heber gemäß Figur 14 in zwei perspektivischen Ansichten.

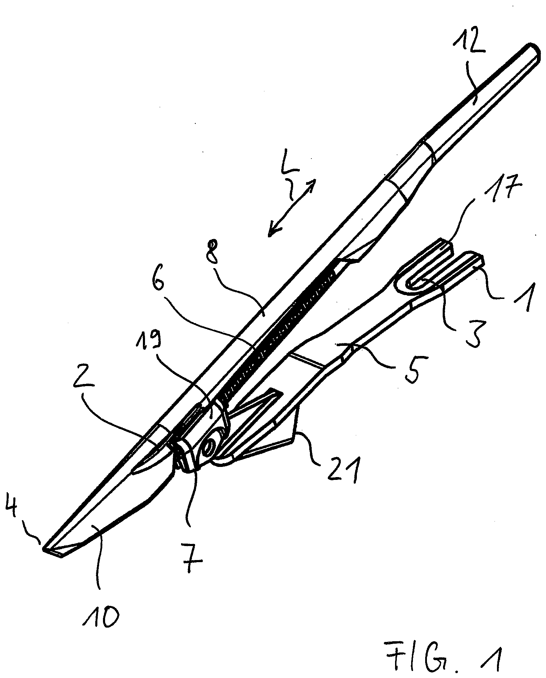

In der Figur 1 ist eine Ausführungsform des erfindungsgemäßen Hebers für Erntegut perspektivisch dargestellt. Der Heber umfasst eine Tragschiene 5, welche zur Befestigung des Hebers an einem Mähwerk einer Erntemaschine vorgesehen ist. Dazu weist die Tragschiene 5 an ihrem hinteren Ende 1 eine Ausnehmung 3 auf, welche als ein zu dem hinteren Ende 1 hin geöffnetes Langloch ausgeführt ist. Die Ausnehmung 3 lässt sich auf einen Bolzen mit Gewinde an dem Mähwerk aufschieben und mit einer Gewindemutter sichern (nicht dargestellt). Gleichzeitig wird eine Aufnahme 21 an der Tragschiene 5 auf einen Mähfinger (nicht dargestellt) des Mähwerks aufgeschoben. Ein Vorteil der Ausführung mit dem Langloch 3 besteht darin, dass eine Montage der Tragschiene an unterschiedlichen Fingertypen möglich ist, auch wenn die Mähfinger verschiedene Längen und Dicken aufweisen. Auf eine Anschraubfläche 17, welche die Ausnehmung 3 umgibt, wird später noch näher eingegangen.

An ihrem vorderen Ende weist die Tragschiene 5 einen Profilträger 7 auf, an dem ein Heberprofil 8 zur lösbaren Befestigung vorgesehen ist. Das Heberprofil 8 ist erfindungsgemäß in einer Mehrzahl von in Längsrichtung L des Heberprofils 8 beabstandeten Positionen mit dem Profilträger 7 verbindbar. Dazu weist der Profilträger 7 im dargestellten Ausführungsbeispiel zwei gegeneinander verspannbare Klemmbacken 19 auf, welche auf einen Verbindungsbereich 6 des Heberprofils 8 einwirken. Das Heberprofil 8 an sich ist ein in der durch den Doppelpfeil L gekennzeichneten Längsrichtung langgestrecktes, in etwa stabförmiges Bauteil mit einem Kopfbereich 10 an seinem führenden Ende 4, welcher dazu vorgesehen ist, möglichst knapp über dem Boden geführt zu werden. Der Kopfbereich 10 kann beispielsweise in etwa pfeilartig geformt sein, von der Spitze am führenden Ende 4 aus nach hinten breiter werdend, während ein mittlerer Abschnitt des Heberprofils 8 mit dem Verbindungsbereich 6 einen im wesentlichen gleichbleibenden Querschnitt aufweist und ein Ende 12 des Heberprofils 8 nach hinten leicht schmaler werdend zusammenläuft. Auf die Ausgestaltung des Verbindungsbereichs 6 und eines Durchbruchs 2 des Heberprofils 8 wird nachfolgend mit Bezug auf weitere Figuren eingegangen.

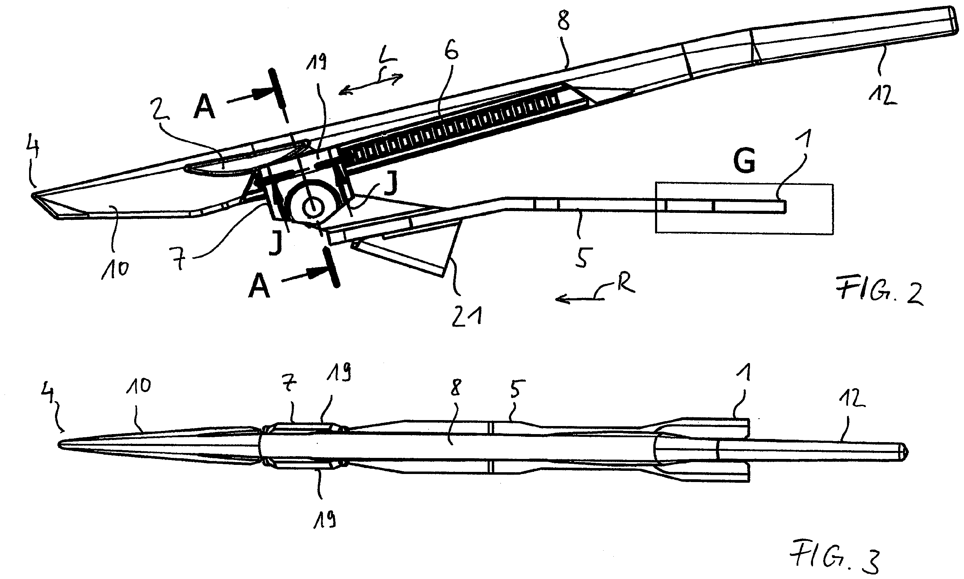

In den Figuren 2 und 3 ist der Heber für Erntegut gemäß Figur 1 in zwei Ansichten dargestellt, wobei die Figur 2 in Einbaulage eine Seitenansicht darstellt und die Figur 3 eine Ansicht von oben. Eine Arbeitsrichtung ist durch den mit R bezeichneten Pfeil dargestellt. Es handelt es sich um die Arbeitsrichtung des nicht dargestellten Mähwerks, welche in der Regel der Fahrtrichtung der Erntemaschine entspricht. Das bedeutet, der Heber für Erntegut bewegt sich im Betrieb in Richtung des Pfeils R durch das Erntegut hindurch, richtet dieses dabei auf und aus, um es dem Mähwerk so zuzuführen, dass das Erntegut am Halm geschnitten wird und keine Früchte zerstört werden. Zur Anpassung an verschiedene Arten von Erntegut kann der Profilträger 7 über eine quer zur Arbeitsrichtung R ausgerichtete Drehachse drehbeweglich verstellbar sein. Erfindungsgemäß ist vorgesehen, dass das Heberprofil 8 in einer Mehrzahl von in seiner Längsrichtung L beabstandeten Positionen mit dem Profilträger 7 verbindbar ist. Dazu wirkt der Profilträger 7 mit dem Verbindungsbereich 6 zusammen, welcher auch den maximalen Verstellbereich angibt. Denkbar ist, dass die gegeneinander verspannbaren Klemmbacken 19 des Profilträgers 7 sich in den Verbindungsbereich 6 derart hinein arbeiten, dass eine im wesentlichen auf Kraftschluss basierende Verbindung hergestellt wird. Gemäß einer bevorzugten Ausführungsform ist das Heberprofil 8 jedoch formschlüssig mit dem Profilträger 7 verbindbar. Dazu weist der Verbindungsbereich 6 eine Ausformung auf, die eine komplementäre Entsprechung an dem Profilträger 7 findet, so dass die Ausformungen entsprechend ineinander eingreifen können und so eine in Längsrichtung L formschlüssige Verbindung bilden. Als Ausformung wird in der Regel eine Verzahnung gewählt. Durch die formschlüssige Verbindung wird vorteilhaft schon bei geringen Anzugskräften am Profilträger 7 eine stabile Verbindung zwischen dem Profilträger 7 und dem Heberprofil 8 erzeugt, als mit einer auf Klemmkraft beruhenden kraftschlüssigen Verbindung.

Der Kopfbereich 10 des Heberprofils 8 wird bei bestimmtem Erntegut, wie beispielsweise von der Ernte von Bohnen, äußerst knapp über der Bodenoberfläche geführt und kann dabei sogar kurzfristig in den Boden eindringen, wodurch verhindert werden soll, dass weit unten am Strauch wachsende Schoten durch das Mähwerk zerstört werden. Das Heberprofil 8 ist dabei besonders starken Belastungen ausgesetzt, weshalb der Verschleiß an den Heberprofilen 8 vergleichsweise hoch ist. Es hat sich als vorteilhaft herausgestellt, die Heberprofile 8 aus einem Material herzustellen, das vergleichsweise günstig in der Herstellung, aber widerstandsfähig und insbesondere gut elastisch verformbar ist. Wenn der Kopfbereich 10 beispielsweise auf Steine im Boden trifft, wird das Kunststoffprofil 8 elastisch deformiert und kehrt im Wesentlichen in seine ursprüngliche Form zurück. Zur Unterstützung der elastischen Deformierbarkeit des Kopfbereiches 10 weist das erfindungsgemäße Heberprofil 8 einen Durchbruch 2 auf, welcher quer zu der Längs- bzw. Arbeitsrichtung durch das Heberprofil 8 hindurch verläuft. Der Durchbruch 2 erstreckt sich in Längsrichtung L zwischen dem vorderen Ende 4 des Heberprofils 8 und dem Verbindungsbereich 6, insbesondere in einem Übergangsbereich zwischen dem Kopfbereich 10 und dem Verbindungsbereich 6. Da in dem Verbindungsbereich 6 der Profilträger 7 das Heberprofil 8 hält, ist anzustreben, dass der Verbindungsbereich 6 nicht deformiert wird, da sonst die formschlüssige Verbindung mit dem Profilträger 7 gelöst werden könnte, was zu einem Verlust des Heberprofils 8 während des Ernteeinsatzes zur Folge haben könnte. Das Fenster 2 stellt eine Schwächung des Heberprofils 8 in dem Übergangsbereich zwischen dem Kopfbereich 10 und dem Verbindungsbereich 6 dar, wodurch vorteilhaft erreicht wird, dass der Kopfbereich 10 unter starker Krafteinwirkung zur Seite ausgelenkt wird, wogegen der Verbindungsbereich 6 nicht wesentlich verformt wird. Eine Kraftübertragung vom Kopfbereich 10 zu dem Verbindungsbereich 6 findet über den durch den Durchbruch 2 geschwächten Übergangsbereich praktisch nicht statt. Insbesondere wird der Kopfbereich 10 nach Wegfall der Belastung elastisch wieder in seine ursprüngliche Position zurückgestellt. Der Durchbruch 2 kann dabei durchgehend ausgeführt sein, was jedoch nicht zwingend erforderlich ist. Gemäß einer bevorzugten Ausführungsform ist der Durchbruch 2 durch einen Steg 16 verschlossen, dessen Widerstand gegenüber Verformung wesentlich geringer ist, als bei dem Kopfbereich 10. Ein Vorteil des geschlossenen Durchbruchs besteht darin, dass sich keine Halme oder Ähnliches in dem Durchbruch verfangen können, die das Mähergebnis beeinflussen könnten.

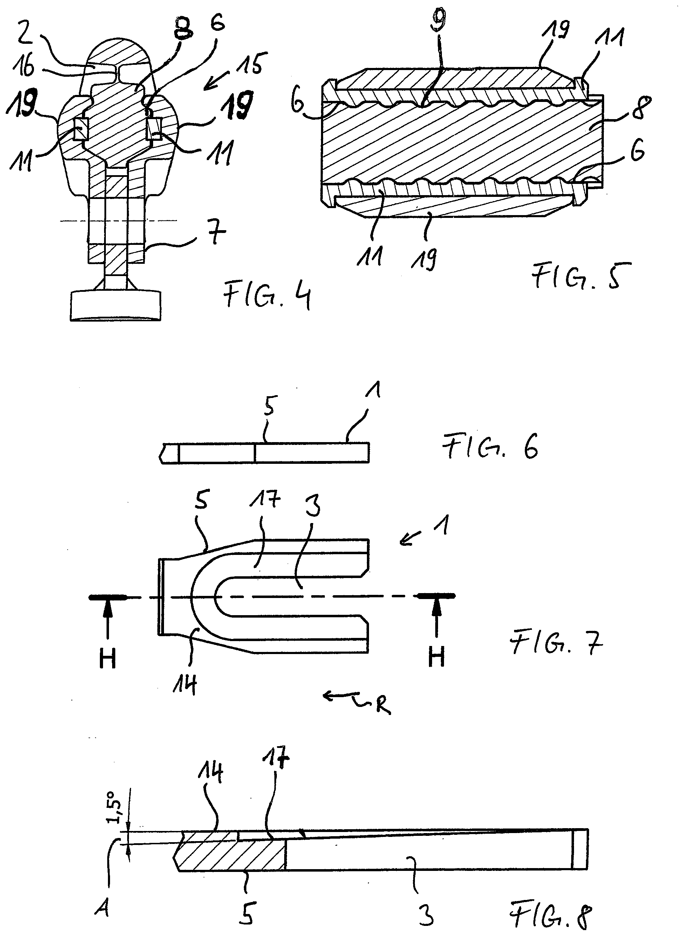

Im Zusammenhang mit den Figuren 4 und 5 wird nachfolgend die formschlüssige Verbindung zwischen dem Heberprofil 8 und dem Profilhalter 7 näher erläutert. Die Figur 4 zeigt einen Querschnitt entlang der Linie A-A in Figur 2 und die Figur 5 zeigt einen Schnitt entlang der Linie J-J, ebenfalls in Figur 2. Der Querschnitt in Figur 4 zeigt den Profilträger 7 mit dem Heberprofil 8, wobei das Heberprofil 8 von einer Klemmbackenanordnung 15 gehalten wird. Die Klemmbackenanordnung 15 greift in einem Bereich unterhalb des Durchbruchs 2, der durch einen vergleichsweise dünnen Steg 16 verschlossen ist, an. Die Klemmbackenanordnung 15 umfasst zwei gegeneinander wirkende und gegeneinander verspannbare Klemmbacken 19, wobei ebenso gut drei oder mehr Spannbacken denkbar wären, die auf einen dementsprechend in der Form angepassten Verbindungsbereich 6 des Heberprofils 8 wirken könnten. Die Längsrichtung L des Heberprofils 8 ist in der Figur 4 senkrecht zu der Zeichenebene ausgerichtet. In den übrigen Raumrichtungen umschließen die Klemmbacken 19 das Heberprofil 8 derart, dass eine formschlüssige Verbindung gegeben ist. In der Längsrichtung L wird diese formschlüssige Verbindung im dargestellten Ausführungsbeispiel durch Einlegeteile 11 hergestellt, welche zwischen den Klemmbacken 19 und dem Verbindungsbereich 6 des Heberprofils 8 angeordnet sind. In der Figur 5 ist erkennbar, dass die Einlegeteile 11 in der Längsrichtung L wiederum formschlüssig an den Klemmbacken 19 festgelegt sind. Die Einlegeteile11 weisen auf ihrer dem Verbindungsbereich 6 des Heberprofils 8 zugewandten Seite eine Verzahnung 9 auf, welche mit einer entsprechenden Gegenverzahnung des Verbindungsbereichs 6 zusammenwirkt. Durch die Verzahnung 9 ist auch in Längsrichtung 11 eine überwiegend auf Formschluss der Bauteile beruhende Verbindung gegeben. Die Einlegeteile 11 haben den Vorteil, dass sie austauschbar sind, wodurch Heberprofile 8 mit unterschiedlichen Ausformungen der Verbindungsbereiche 6 verwendet werden können, indem jeweils dazu kongruent geformte Einlegeteile 11 zur Verfügung gestellt werden. Außerdem lassen sich die Einlegeteile 11 deutlich besser austauschen, wenn es zu einer Beschädigung der Verzahnung durch zu hohe Belastung kommt.

Anhand der Figuren 6 bis 8 wird die Befestigung der Tragschiene 5 in dem Mähwerk näher erläutert. Die Figur 6 zeigt ein mit G bezeichnetes Detail aus Figur 2 in einer Seitenansicht. Die Figur 7 zeigt das Detail gemäß Figur 6 in einer Ansicht von oben. Die Tragschiene 5 weist in der dargestellten Ausführungsform, die dem in Figur 1 dargestellten Heber entspricht, eine Ausnehmung 3 zur Befestigung an dem Mähwerk (nicht dargestellt) auf, wobei die Ausnehmung 3 als ein sich in Arbeitsrichtung R erstreckendes Langloch ausgeführt ist. Gemäß einer bevorzugten Ausführungsform ist vorgesehen, dass die Ausnehmung 3 zu dem in Arbeitsrichtung R hinteren Ende 1 der Tragschiene 5 hin geöffnet ist. In der Figur 8 ist ein Schnitt entlang der Linie H-H in Figur 7 vergrößert dargestellt. Um die Ausnehmung 3 herum ist eine Anschraubfläche 17 derart in die Oberfläche 14 der Tragschiene 5 eingearbeitet, dass durch die Anschraubfläche 17 und die Oberfläche 14 definierte Ebenen einen spitzen Winkel A einschließen, dessen Winkelmaß im dargestellten Ausführungsbeispiel 1,5 Grad beträgt.

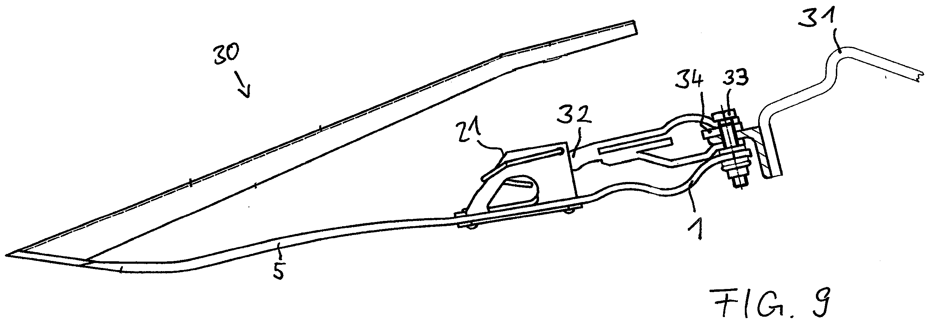

In der Figur 9 ist der Mähbalken 31 in schematischer Darstellung erkennbar, von dem ein Mähfinger 32 vorstehend dargestellt ist. Dieser ist über eine Schraube 33 am Mähbalken 31 festgelegt. Es sind in die Zeichenebene hinein, bzw. aus dieser heraus, mehrere weitere Mähfinger 32 dem Mähbalken 31 mit Abstand zueinander zugeordnet. Die Mähfinger 32 dienen zur Führung eines Messerbalkens 34, der Mähklingen zum Abtrennen des Erntegutes aufweist. Der dargestellte Heber 30 für Erntegut entspricht dem Stand der Technik. Die Befestigung der erfindungsgemäßen Heber für Erntegut erfolgt an einem ebensolchen Mähwerk. Das hintere Ende 1 der Tragschiene 5 ist beispielsweise über eine Schraube 33 am Mähbalken 31 festlegbar. Die Tragschiene 5 ist bevorzugt aus einem Flachmaterial hergestellt und weist biegeelastische Eigenschaften auf. Die Tragschiene 5 ist über Befestigungsmittel in Form der Aufnahme 21 am Mähfinger 32 abgestützt. Die Aufnahme 21 ist mit der Tragschiene 5 beispielsweise durch Nieten verbunden.

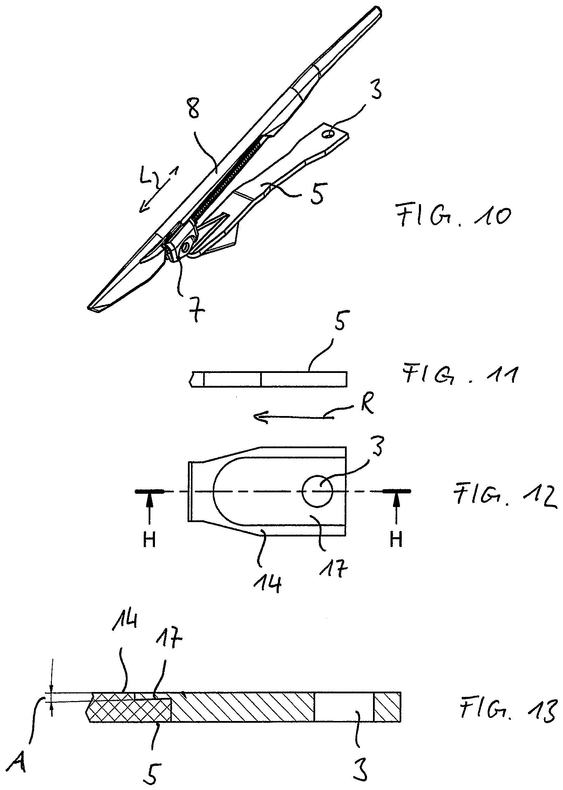

In der Figur 10 ist eine hinsichtlich der Tragschiene 5 alternative Ausführungsform zu dem in Figur 1 dargestellten Heber perspektivisch dargestellt. Zur Befestigung weist die Tragschiene 5 eine Ausnehmung 3 in Form einer kreisrunden Bohrung auf, die gegenüber einem Langloch bzw. einem nach hinten geschlitzten Langloch gemäß Figuren 6 bis 8 weniger aufwändig herzustellen ist.

Anhand der Figuren 11 bis 13 wird erneut die Befestigung der Tragschiene 5 in dem Mähwerk näher erläutert. Die Figur 11 zeigt ein Detail der Tragschiene 5 aus Figur 10 in einer Seitenansicht. Die Figur 12 zeigt das Detail gemäß Figur 11 in einer Ansicht von oben. Die Tragschiene 5 weist in der dargestellten Ausführungsform, die dem in Figur 10 dargestellten Heber entspricht, eine Ausnehmung 3 zur Befestigung an dem Mähwerk (nicht dargestellt) auf, wobei die Ausnehmung 3 als eine kreisrunde Bohrung ausgeführt ist. In der Figur 13 ist ein Schnitt entlang der Linie H-H in Figur 12 vergrößert dargestellt. Um die Ausnehmung 3 herum ist eine Anschraubfläche 17 derart in die Oberfläche 14 der Tragschiene 5 eingearbeitet, dass durch die Anschraubfläche 17 und die Oberfläche 14 definierte Ebenen einen spitzen Winkel A einschließen, dessen Winkelmaß bevorzugt etwa 1,5 Grad beträgt.

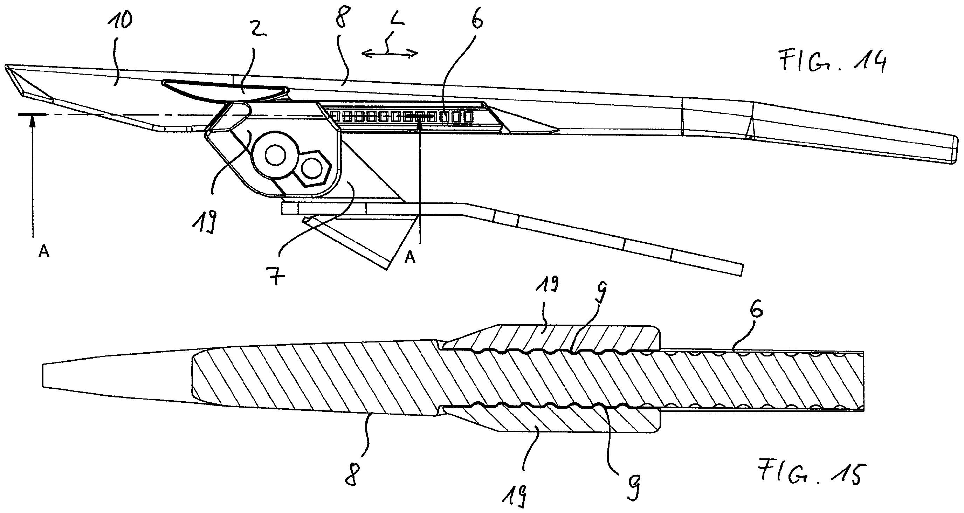

In der Figur 14 ist eine weitere Ausführungsform des erfindungsgemäßen Hebers für Erntegut dargestellt. Zur Anpassung an verschiedene Arten von Erntegut kann der Profilträger 7 über eine Drehachse drehbeweglich verstellbar sein. Erfindungsgemäß ist vorgesehen, dass das Heberprofil 8 in einer Mehrzahl von in seiner Längsrichtung L beabstandeten Positionen mit dem Profilträger 7 verbindbar ist. Dazu wirkt der Profilträger 7 mit dem Verbindungsbereich 6 zusammen, welcher auch den maximalen Verstellbereich angibt. Gemäß einer bevorzugten Ausführungsform ist das Heberprofil 8 formschlüssig mit dem Profilträger 7 verbindbar. Dazu weist der Verbindungsbereich 6 eine Ausformung auf, die eine komplementäre Entsprechung an dem Profilträger 7 findet, so dass die Ausformungen entsprechend ineinander eingreifen können und so eine in Längsrichtung L formschlüssige Verbindung bilden. Als Ausformung wird in der Regel eine Verzahnung gewählt. Durch die formschlüssige Verbindung wird vorteilhaft schon bei geringen Anzugskräften am Profilträger 7 eine stabile Verbindung zwischen dem Profilträger 7 und dem Heberprofil 8 erzeugt.

Der Kopfbereich 10 des Heberprofils 8 wird bei bestimmtem Erntegut, wie beispielsweise von der Ernte von Bohnen, äußerst knapp über der Bodenoberfläche geführt und kann dabei sogar kurzfristig in den Boden eindringen. Wenn der Kopfbereich 10 beispielsweise auf Steine im Boden trifft, wird das Kunststoffprofil 8 elastisch deformiert und kehrt im Wesentlichen in seine ursprüngliche Form zurück. Zur Unterstützung der elastischen Deformierbarkeit des Kopfbereiches 10 weist das erfindungsgemäße Heberprofil 8 einen Durchbruch 2 auf, welcher quer zu der Längsrichtung durch das Heberprofil 8 hindurch verläuft. Der Durchbruch 2 erstreckt sich in Längsrichtung L zwischen dem vorderen Ende 4 des Heberprofils 8 und dem Verbindungsbereich 6, insbesondere in einem Übergangsbereich zwischen dem Kopfbereich 10 und dem Verbindungsbereich 6. Da in dem Verbindungsbereich 6 der Profilträger 7 das Heberprofil 8 hält, ist anzustreben, dass der Verbindungsbereich 6 nicht deformiert wird, da sonst die formschlüssige Verbindung mit dem Profilträger 7 gelöst werden könnte, was zu einem Verlust des Heberprofils 8 während des Ernteeinsatzes zur Folge haben könnte. Das Fenster 2 stellt eine Schwächung des Heberprofils 8 in dem Übergangsbereich zwischen dem Kopfbereich 10 und dem Verbindungsbereich 6 dar, wodurch vorteilhaft erreicht wird, dass der Kopfbereich 10 unter starker Krafteinwirkung zur Seite ausgelenkt wird, wogegen der Verbindungsbereich 6 nicht wesentlich verformt wird. Eine Kraftübertragung vom Kopfbereich 10 zu dem Verbindungsbereich 6 findet über den durch den Durchbruch 2 geschwächten Übergangsbereich praktisch nicht statt. Insbesondere wird der Kopfbereich 10 nach Wegfall der Belastung elastisch wieder in seine ursprüngliche Position zurückgestellt. Der Durchbruch 2 kann dabei durchgehend ausgeführt sein, was jedoch nicht zwingend erforderlich ist. Gemäß einer bevorzugten Ausführungsform ist der Durchbruch durch einen Steg verschlossen, dessen Widerstand gegenüber Verformung wesentlich geringer ist, als bei dem Kopfbereich 10.

Im Zusammenhang mit der Figur 15 wird nachfolgend die formschlüssige Verbindung zwischen dem Heberprofil 8 und dem Profilhalter 7 näher erläutert und auf einen wesentlichen Unterschied der dargestellten Ausführungsform zu dem Heber gemäß Figuren 1 bis 5 eingegangen. Die Figur 15 zeigt einen Schnitt entlang der Linie A-A in Figur 14, in vergrößerter Darstellung. Der Schnitt zeigt das Heberprofil 8, wobei das Heberprofil 8 von zwei gegeneinander wirkenden Klemmbacken 19 einer Klemmbackenanordnung eingespannt ist. Die Klemmbacken 19 weisen auf ihrer dem Verbindungsbereich 6 des Heberprofils 8 zugewandten Seite eine Verzahnung 9 auf, welche mit einer entsprechenden Gegenverzahnung des Verbindungsbereichs 6 zusammenwirkt. Durch die Verzahnung 9 ist in Längsrichtung L eine überwiegend auf Formschluss der Bauteile beruhende Verbindung gegeben. Die Verzahnung 9 direkt an der Klemmbacke 19 vorzusehen, hat den Vorteil, dass auf den Einsatz leicht verlierbarer Einzelteile verzichtet werden kann.

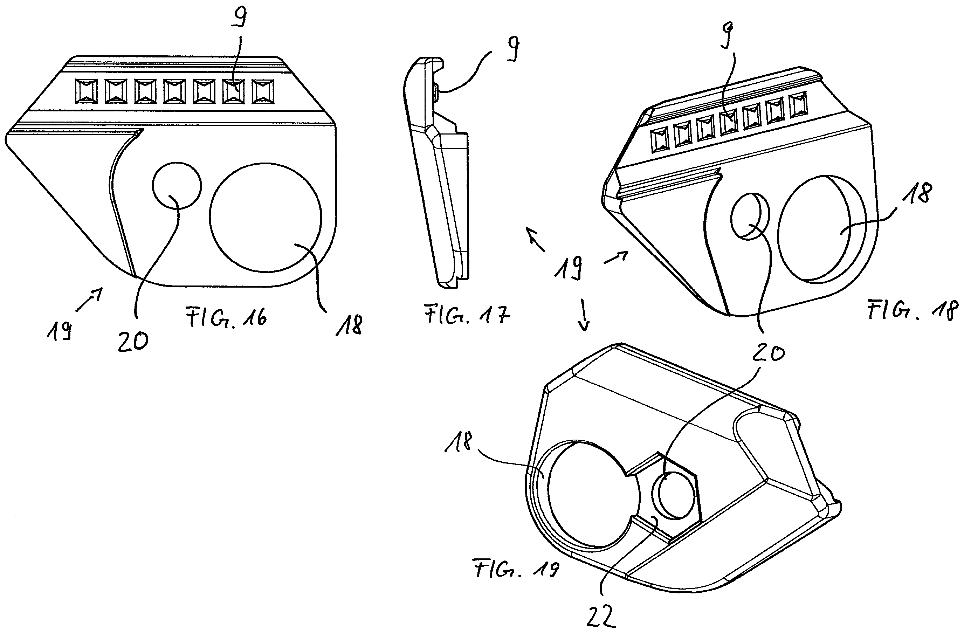

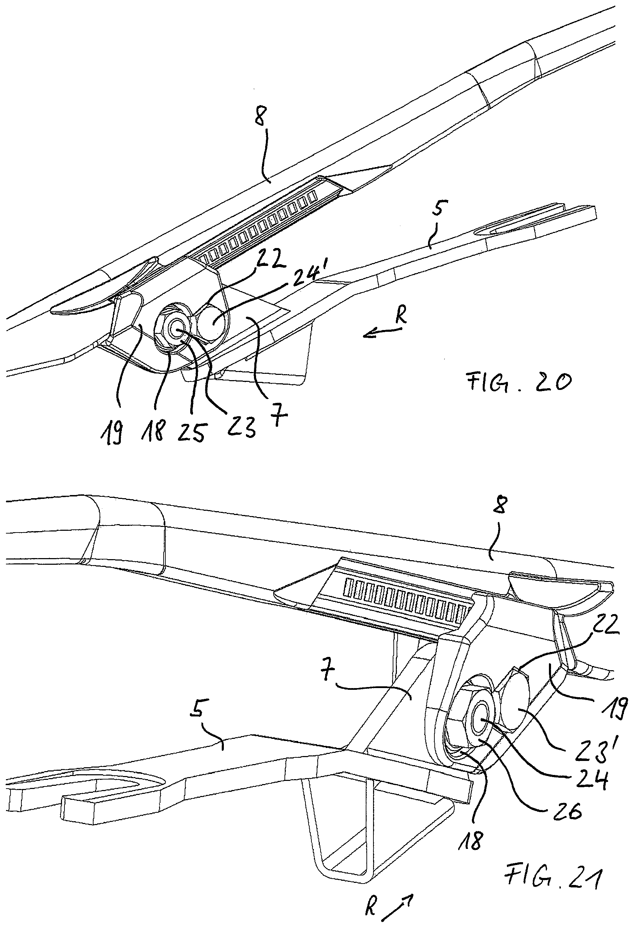

In den Figuren 16 bis 19 ist die Klemmbacke 19 des Hebers gemäß Figur 14 in vier verschiedenen Ansichten dargestellt, die hier gemeinsam beschrieben werden. Die Verzahnung 9 weist eine Reihe von Zähnen innen an einer halbschalenförmigen Aufnahme für den Verbindungsbereich des Heberprofils 8 (nicht dargestellt) auf. Die Ausnehmungen 18 und 20 der Klemmbacken 19 unterscheiden diese von den in den Figuren 1 bis 5 und 10 gezeigten Klemmbacken. Die in den Figuren 16 bis 19 dargestellte Klemmbacke 19 ist als in Arbeitsrichtung R gesehen rechte Klemmbacke vorgesehen, die an dem Profilträger 7 mittels eines Schraubbolzens 23 und einer Schraubmutter 25 (siehe Figuren 20 und 21) mit der ersten Ausnehmung 20 zu befestigen ist. Eine Verschraubung der zwei Klemmbacken 19 gegeneinander erfolgt nicht. Vielmehr ermöglicht die zweite Ausnehmung 18 der Klemmbacke 19 den ungehinderten Zugang zu der Verschraubung der jeweils anderen Klemmbacke, wie nachfolgend im Zusammenhang mit den Figuren 20 und 21 näher erläutert wird. Die Ausformung 22 um die erste Ausnehmung 20 herum dient einer in Drehrichtung formschlüssigen Aufnahme eines Schraubenkopfs 23', der in der Regel vier- oder sechskantförmig ausgeführt ist, um das Anziehen und Lösen einer Gegenmutter 25 zu vereinfachen.

Die Figuren 20 und 21 zeigen den erfindungsgemäßen Heber gemäß Figur 14 in zwei perspektivischen Ansichten. In der Figur 20 ist die in Arbeitsrichtung R linke Seite, in der Figur 21 die in Arbeitsrichtung R rechte Seite sichtbar. Die in der Figur 20 erkennbare linke Klemmbacke 19 weist ebenfalls die zweite Ausnehmung mit größerem Durchmesser als die erste Ausnehmung 20 auf. Innerhalb der zweiten Ausnehmung 18 ist der die rechte Klemmbacke 19 befestigende Schraubbolzen 23 erkennbar, der mit der Schraubmutter 25 gesichert wird. Ein Lösen der Schraubmutter 25 und somit ein Lösen der rechten Klemmbacke 19 ist möglich, ohne die linke Klemmbacke 19 zu lösen. Diese hält vielmehr den voreingestellten Winkel des Heberprofils 8 fest, indem die relative Position der linken Klemmbacke 19 zu dem Profilträger 7 unverändert bleibt, während das Profil 8 ausgetauscht wird, beispielsweise auf Grund eines Defekts. Die linke Klemmbacke 19 ist ebenfalls mittels eines Schraubbolzens 24 durch die erste Ausnehmung 20 an dem Profilträger befestigt, wobei in der Figur 20 lediglich der Schraubbolzenkopf 24' sichtbar ist, der formschlüssig in der sechskantförmigen Ausformung 22 der Klemmbacke 19 aufgenommen ist. In der Figur 21 ist erkennbar, dass der Schraubbolzen 24 durch eine Schraubmutter 26 gesichert ist. Die zweite Ausnehmung 18 der rechten Klemmbacke 19 erlaubt erkennbar auch ein Lösen der linken Klemmbacke 19, während die rechte Klemmbacke am Profilträger 7 befestigt bleibt. Auch der Schraubbolzenkopf 23' ist in der sechseckförmigen Ausformung 22 der rechten Klemmbacke 19 formschlüssig aufgenommen, um das Lösen und Anziehen der Schraubmutter 25 zu erleichtern.

### Bezugszeichenliste

- 1: Hinteres Ende
- 2: Durchbruch
- 3: Ausnehmung
- 4: Führendes Ende
- 5: Tragschiene
- 6: Verbindungsbereich
- 7: Profilträger
- 8: Heberprofil
- 9: Verzahnung
- 10: Kopfbereich
- 11: Einlegeteil
- 12: Ende
- 14: Oberfläche der Tragschiene
- 15: Klemmbackenanordnung
- 16: Steg
- 17: Anschraubfläche
- 18: Zweite Ausnehmung der Klemmbacke
- 19: Klemmbacke
- 20: Erste Ausnehmung der Klemmbacke
- 21: Aufnahme
- 22: Ausformung
- 23: Schraubbolzen
- 23': Schraubbolzenkopf
- 24: Schraubbolzen
- 24': Schraubbolzenkopf
- 25: Schraubmutter
- 26: Schraubmutter
- 30: Heber für Erntegut nach dem Stand der Technik
- 31: Mähbalken
- 32: Mähfinger
- 33: Schraube
- 34: Messerbalken
- L: Längsrichtung
- R: Arbeitsrichtung
- A: Winkel

## Patentansprüche

1. Heber für Erntegut für ein Mähwerk einer Erntemaschine, umfassend eine an dem Mähwerk befestigbare Tragschiene (5), wobei die Tragschiene einen Profilträger (7) aufweist, und wobei ein Heberprofil (8) zur lösbaren Befestigung an dem Profilträger (7) vorgesehen ist,
**dadurch gekennzeichnet,**
**dass** das Heberprofil (8) in einer Mehrzahl von diskreten, in Längsrichtung (L) des Heberprofils (8) beabstandeten Positionen mit dem Profilträger (7) verbindbar ist.

2. Heber für Erntegut nach Anspruch 1,
**dadurch gekennzeichnet,**
**dass** das Heberprofil (8) in der Mehrzahl von Positionen formschlüssig mit dem Profilträger (7) verbindbar ist.

3. Heber für Erntegut nach einem der vorhergehenden Ansprüche,
**dadurch gekennzeichnet,**
**dass** das Heberprofil (8) einen Verbindungsbereich (6) aufweist, wobei der Verbindungsbereich (6) sich in Längsrichtung (L) entlang des Heberprofils (8) erstreckt und wobei Befestigungsmittel (9, 15) an dem Profilträger (7) mit dem Verbindungsbereich (6) zusammenwirken.

4. Heber für Erntegut nach Anspruch 3,
**dadurch gekennzeichnet,**
**dass** die Befestigungsmittel eine Klemmbackenanordnung (15) und/oder eine Verzahnung (9) aufweisen.

5. Heber für Erntegut nach Anspruch 4,
**dadurch gekennzeichnet,**
**dass** die Verzahnung (9) an mindestens einer Klemmbacke (19) des Profilträgers (7) angeordnet ist.

6. Heber für Erntegut nach einem der Ansprüche 4 oder 5,
**dadurch gekennzeichnet,**
**dass** das Heberprofil (8) in dem Verbindungsbereich (6) eine Gegenverzahnung aufweist, wobei die Gegenverzahnung mit der Verzahnung (9) an dem Profilträger (7) zusammenwirkt.

7. Heber für Erntegut nach einem der Ansprüche 3 bis 5,
**dadurch gekennzeichnet,**
**dass** der Profilträger (7) über eine quer zur Arbeitsrichtung (R) ausgerichtete Drehachse drehbeweglich verstellbar ist.

8. Heber für Erntegut nach einem der vorhergehenden Ansprüche,
**dadurch gekennzeichnet,**
**dass** ein Heberprofil (8) mit der Tragschiene verbunden ist, wobei das Heberprofil (8) ein in Arbeitsrichtung (R) führendes Ende (4) aufweist, wobei ein Durchbruch (2) in dem Heberprofil zur Erleichterung einer elastischen Verformung des Heberprofils bei einer Krafteinwirkung auf das führende Ende (4) vorgesehen ist.

9. Heber für Erntegut nach Anspruch 8,
**dadurch gekennzeichnet,**
**dass** der Durchbruch (2) zumindest abschnittsweise zwischen dem führenden Ende (4) und einem Verbindungsbereich (6) zur Befestigung an dem Profilträger (7) angeordnet ist.

10. Heber für Erntegut nach einem der Ansprüche 8 oder 9,
**dadurch gekennzeichnet,**
**dass** der Durchbruch (2) von einem Steg (16) verschlossen ist, wobei der Steg einer Deformierung des Durchbruchs keinen wesentlichen Widerstand entgegensetzt.

## Claims

1. Crop lifter for a mower of a harvesting machine, comprising a support bar (5) attachable on the mower, wherein the support bar has a carrier (7) and wherein a lifter rod (8) is provided for the detachable mounting on the carrier (7),
**characterised in**
**that** the lifter rod (8) is connectable to the carrier (7) at a multitude of discrete positions, distanced in longitudinal direction (L) of the lifter rod (8).

2. Crop lifter according to claim 1,
**characterised in**
**that** the lifter rod (8) is form-fittingly connectable to the carrier (7) at the multitude of positions.

3. Crop lifter according to one of the preceding claims,
**characterised in**
**that** the lifter rod (8) has a connection portion (6), wherein the connection portion (6) extends in the longitudinal direction (L) along the lifter rod (8) and wherein attachment means (9, 15) on the carrier (7) interact with the connection portion (6).

4. Crop lifter according to claim 3,
**characterised in**
**that** the attachment means comprise a clamping jaws arrangement (15) and/or a serration (9).

5. Crop lifter according to claim 4,
**characterised in**
**that** the serration (9) is arranged on at least one clamping jaw (19) of the carrier (7).

6. Crop lifter according to one of claims 4 or 5,
**characterised in**
**that** the lifter rod (8) comprises at the connection portion (6) a counter serration, wherein the counter serration interacts with the serration (9) on the carrier (7).

7. Crop lifter according to one of claims 3 to 5,
**characterised in**
**that** the carrier (7) is rotatably adjustable via a rotational axis arranged transversally to the working direction (R).

8. Crop lifter according to one of the preceding claims,
**characterised in**
**that** a lifter rod (8) is connected to the support bar,
wherein the lifter rod (8) has, when seen in working direction (R), a leading end (4), wherein a through opening (2) is provided in the lifter rod for facilitating an elastic deformation of the lifter rod when a force is applied to the leading end.

9. Lifter rod according to claim 8,
**characterised in**
**that** the through opening (2) is arranged at least portion-wise between the leading end (4) and a connection portion (6) for attachment on the carrier (7).

10. Lifter rod according to one of claims 8 or 9,
**characterised in**
**that** the through opening (2) is closed by a web (16), wherein the web does not resist substantially a deformation of the through opening.

## Revendications

1. Releveur de cultures pour une faucheuse d'une moissonneuse, comprenant, un rail porteur (5) pouvant se fixer sur la faucheuse, le rail porteur comportant un support profilé (7) et un profilé du releveur (8) étant prévu pour être fixé de manière amovible sur le support profilé (7), **caractérisé en ce que** le profilé du releveur (8) peut être assemblé avec le support profilé (7) dans une pluralité de position discrètes, écartées dans la direction longitudinale (L) du profilé du releveur (8).

2. Releveur de cultures selon la revendication 1, **caractérisé en ce que** le profilé du releveur (8) peut être assemblé par complémentarité de forme avec le support profilé (7) dans la pluralité de positions.

3. Releveur de cultures selon l'une quelconque des revendications précédentes, **caractérisé en ce que** le profilé du releveur (8) comporte une zone d'assemblage (6), la zone d'assemblage (6) s'étendant dans la direction longitudinale (L) le long du profilé du releveur (8) et des moyens d'assemblage (9, 15) sur le support profilé (7) coopérant avec la zone d'assemblage (6).

4. Releveur de cultures selon la revendication 3, **caractérisé en ce que** les moyens d'assemblage comportent un agencement de mâchoires de serrage (15) et/ou une denture (9).

5. Releveur de cultures selon la revendication 4, **caractérisé en ce que** la denture (9) est placée sur au moins une mâchoire de serrage (19) du support profilé (7) .

6. Releveur de cultures selon l'une quelconque des revendications 4 ou 5, **caractérisé en ce que** le profilé du releveur (8) comporte dans la zone d'assemblage (6) une denture antagoniste, la denture antagoniste coopérant avec la denture (9) sur le support profilé (7).

7. Releveur de cultures selon l'une quelconque des revendications 3 à 5, **caractérisé en ce que** le support profilé (7) est ajustable en déplacement rotatif par l'intermédiaire d'un axe de rotation orienté à la transversale de la direction de travail (R).

8. Releveur de cultures selon l'une quelconque des revendications précédentes, **caractérisé en ce qu'**un profilé du releveur (8) est assemblé avec le rail porteur, le profilé du releveur (8) comportant une extrémité (4) menant dans la direction de travail (R), un ajour (2) dans le profilé du releveur étant prévu pour faciliter une déformation élastique du profilé du releveur, lors de l'action d'une force sur l'extrémité (4) directrice.

9. Releveur de cultures selon la revendication 8, **caractérisé en ce que** l'ajour (2) est placé au moins en partie entre l'extrémité (4) directrice et une zone d'assemblage (6) pour la fixation sur le support profilé (7).

10. Releveur de cultures selon l'une quelconque des revendications 8 ou 9, **caractérisé en ce que** l'ajour (2) est fermé par une barrette (16), la barrette n'opposant aucune résistance sensible à la déformation de la barrette.
